# DEMANDE DE BREVET EUROPEEN

(11) **EP 3 912 865 A1**
(43) Date de publication de la demande: **24.11.2021**
(21) Numéro de dépôt: 21174388.5
(22) Date de dépôt: 18.05.2021
(51) Int. Cl.: B60R 19/18, B60R 19/50, B60Q 1/26, B62D 29/04

(54) **PIÈCE DE CARROSSERIE COMPORTANT UNE ZONE RÉTRO ÉCLAIRÉE**

(30) Priorité: 20.05.2020 FR 2005307
(71) Demandeur: Compagnie Plastic Omnium SE, 69007 Lyon (FR)
(72) Inventeur: MOULIN, Gilles, 01150 SAINTE-JULIE (FR); ANDRE, Gérald, 01150 SAINTE-JULIE (FR)
(74) Mandataire: LLR

(57) **Abrégé**

L'invention concerne une pièce de carrosserie (1) en matière plastique peinte constituée d'une unique matière plastique, et d'un seul tenant, comprenant une première zone (10) ayant une première épaisseur et une seconde zone (11) ayant une seconde épaisseur (E), la première épaisseur étant plus importante que la seconde épaisseur (E) de manière à ce que la seconde zone (11) ait une transmittance supérieure à celle de la première zone (10).

## Description

L'invention concerne le domaine de l'industrie automobile, et plus particulièrement une pièce de carrosserie de véhicule automobile comportant un élément transparent ou translucide.

Un élément est qualifié de transparent lorsqu'il se laisse traverser par la lumière dans le domaine du visible. On considère qu'un élément ayant une transmittance supérieure à 70% est transparent. Un élément est qualifié de translucide lorsqu'il se laisse traverser par la lumière dans le domaine du visible, mais sans permettre de distinguer nettement les objets. On considère qu'un élément ayant une transmittance entre 50% et 70% est translucide et qu'un élément ayant une transmittance de 0% est opaque. Selon l'invention, un « élément opaque » est un élément opaque ou semi-opaque, ayant une transmittance inférieure à 5%, de préférence égale à 0%.

La transmittance d'un matériau est la fraction du flux lumineux le traversant. Ainsi la transmittance représente le rapport de l'intensité lumineuse transmise par le matériau sur l'intensité lumineuse incidente. Il s'agit d'une valeur moyenne du profil de flux lumineux d'un matériau mesuré entre 425nm et 725 nm par un spectrophotomètre, par exemple du modèle CL-500A Konica Minolta.

On connaît des éléments rapportés sur une pièce de carrosserie ayant notamment pour objet de mettre en valeur le style d'un véhicule, comme une ligne ou une forme dans le but de renforcer l'image que le constructeur souhaite associer à son modèle de véhicule. Il existe par exemple des baguettes ou joncs chromés placés sur le bord d'une pièce ou d'un équipement. Dans le but de renforcer l'effet esthétique produit par ces éléments de carrosserie il a été proposé de placer une source lumineuse derrière une surface transparente de l'élément de carrosserie.

A titre d'exemple, les baguettes chromées courant le long de la partie latérale du véhicule, les protections de bas de caisse, l'emblème de la marque, les enjoliveurs de poignées de porte, les coques de rétroviseurs sont ces pièces de style dont le design fait l'objet d'un soin particulier de la part des concepteurs du véhicule. Par extension, toutes les pièces de la carrosserie visibles de l'extérieur et participant à l'aspect général du véhicule, telles qu'un ouvrant, un pare-chocs, une calandre, peuvent être considérées également comme des éléments de carrosserie.

Il est connu des pièces de carrosserie issues de moulage de matière plastique, et sur lesquelles un élément transparent est rapporté dans un logement prévu à cet effet.

Ces éléments transparents présentent l'inconvénient de devoir être parfaitement adaptés au logement présent dans la pièce de carrosserie. De plus, l'assemblage de tels éléments optiques sur des pièces de carrosserie, a l'inconvénient de présenter des jeux d'assemblage et des affleurements de moindre qualité visuelle que celle requise pour un véhicule automobile. Enfin, de tels éléments rapportés engendrent une complexité dans la gestion de l'étanchéité aux liquides, tels que l'eau (pluie, lavage...).

Une autre solution pourrait consister à fabriquer la pièce de carrosserie entièrement en une matière transparente ou translucide, et recouvrir de peinture les zones qui doivent être opaques, ou à l'inverse, peindre toute la pièce est gratter les zones qui doivent être transparentes/translucides. Cependant, une telle solution comporte des inconvénients :
- à la limite des zones opaque (peinte) et transparente/translucide, un peu de lumière passe sur les premiers millimètres de la zone peinte, provoquant ainsi un effet «halo» qui n'est pas acceptable ;
- la quantité de peinture à utiliser pour rendre opaque une zone de la pièce de carrosserie peut être importante selon l'épaisseur de la pièce de carrosserie entièrement translucide ou transparente ; ceci engendre des problèmes de coût, de temps de cycle, et de qualité.

L'invention a notamment pour but de remédier à ces inconvénients en proposant une pièce de carrosserie en matière plastique peinte, comprenant une zone transparente solide et étanche aux fluides. L'invention a également pour but un procédé de fabrication d'une pièce de carrosserie en matière plastique peinte comprenant une zone transparente, le procédé étant simple, efficace et peu coûteux.

A cet effet l'invention a pour objet une pièce de carrosserie en matière plastique peinte constituée d'une unique matière plastique et comprenant une première zone ayant une première épaisseur et une seconde zone ayant une seconde épaisseur, la première épaisseur étant plus importante que la seconde épaisseur de manière à ce que la seconde zone ait une transmittance supérieure à celle de la première zone.

La pièce de carrosserie faite d'un seul tenant est particulièrement solide et ne présente pas d'interstice, ni de jeu de désaffleurement formés par le montage de deux pièces, ce qui peut nuire à l'aspect et à l'étanchéité de la pièce. En effet, la limite est nette entre une zone opaque et une zone translucide/transparente.

Par ailleurs, le fait que la pièce de carrosserie soit faite d'un seul tenant, il n'y a pas d'assemblage, et donc l'étanchéité aux fluides (notamment à l'eau) est totale, sans avoir recours à des moyens supplémentaires.

La seconde zone transparente est obtenue par la réalisation d'une zone amincie présentant une épaisseur inférieure à celle de la première zone. Une seule matière peut donc être utilisée pour réaliser la pièce de carrosserie comportant des zones ayant des aspects différents. Ceci permet un procédé de fabrication compatible avec les moyens industriels déjà connus. Aucun investissement particulier n'est donc nécessaire.

De plus, la pièce de carrosserie comportant une zone opaque grâce à l'épaisseur de matière importante, permet de limiter la quantité de primaire (lors de la chaîne de peinture) à appliquer sur la pièce par rapport à une pièce qui serait entièrement translucide ou transparente.

Suivant d'autres caractéristiques optionnelles de la pièce de carrosserie prises seules ou en combinaison :
- la première zone est opaque ou semi-opaque et la seconde zone est transparente ou translucide ;
- la matière est choisie parmi : polypropylène naturel translucide, cyclo oléfines copolymères (COC), polyéthylène (PE), polyamide (PA), polycarbonate (PC), acrylonitrile butadiène styrène (ABS), mélange de polycarbonate (PC), polystyrène (PS) polyméthacrylate de méthyle (PMMA), polyuréthane thermoplastique (TPU) et polyester (PET/PETG). En effet, en modifiant l'épaisseur de certaines zones pour obtenir des parties amincies par rapport au reste de la pièce, il est possible de choisir une matière qui est translucide et non transparente dans la première zone.
- la matière est un copolymère aléatoire de polypropylène, tel que du Moplen RP340N®;
- la seconde zone présente une épaisseur comprise entre 0,5 et 2 mm, de préférence sensiblement égale à 1,5mm. Lorsque la pièce de carrosserie est constituée de Moplen RP340N, les zones amincies ayant une épaisseur comprise dans cet intervalle présente une meilleure transmittance qui peut atteindre jusqu'à 81% de transmittance.
- la première zone présente une épaisseur comprise entre 2,8 et 3,5mm.

L'invention a également pour objet un véhicule automobile comportant au moins une pièce de carrosserie précédemment décrite.

L'invention a encore pour objet un procédé de fabrication de la pièce de carrosserie précédemment décrite comprenant une étape de moulage consistant à injecter dans un moule la matière pour former la pièce de carrosserie et une étape de peinture au moins sur la première zone.

Suivant d'autres caractéristiques optionnelles du procédé de fabrication prises seules ou en combinaison :
- le procédé utilise un insert dans le moule pour obtenir la seconde zone. Ainsi, il est possible d'utiliser la même machine pour réaliser des pièces de carrosserie avec ou sans zone transparente, ce qui permet de diversifier les types de pièces produits avec un même moyen de fabrication. Il n'est pas nécessaire de développer un système d'injection spécifique, capable de générer des épaisseurs différentes, ce qui est long et complexe, et génère en général des défauts importants. Ce procédé est donc plus fiable. Par ailleurs, la différence d'épaisseur est obtenue au moment même de l'injection, ne nécessitant pas ainsi d'outillage supplémentaire en post-traitement et évitant d'ajouter du temps pour produire la pièce avec une épaisseur réduite localement. Ce procédé pour obtenir une pièce présentant deux épaisseurs différentes est donc simple et rapide.
- le procédé comprend les étapes suivantes : maroufler la seconde zone ; peindre l'ensemble de la pièce de carrosserie ; retirer le marouflage. L'étape de marouflage permet de peindre l'ensemble de la pièce avec moins d'exigence de précision, donc plus rapidement, tout en protégeant la zone transparente des projections de peinture.
- le procédé comprend les étapes suivantes : peindre l'ensemble de la pièce de carrosserie ; enlever la peinture située dans la seconde zone au moyen d'un faisceau laser. Cette méthode, dite de « grattage laser », permet d'obtenir un contour très précis pour les zones transparentes. Cette alternative est particulièrement avantageuse pour réaliser des zones non peintes de petites dimensions ou avec des formes et contours complexes. Cette technique d'enlèvement de matière par grattage laser peut également être utilisée pour obtenir la seconde zone. Elle permet ainsi le cas échéant d'enlever en même temps, de façon franche, de la matière injectée pour former la seconde zone, et un revêtement de peinture qui recouvrait entièrement la pièce, et qui doit souligner le contour de la seconde zone. Cette technique permet aussi d'obtenir un état de surface contrôlé pour limiter la rugosité qui pourrait atténuer la transparence de la zone avec épaisseur réduite.
- la seconde zone est obtenue par enlèvement de matière dans la pièce de carrosserie, en post-traitement de l'injection de la pièce. Les moyens d'injection sont donc très simples, sans avoir à gérer un insert dans le moule pour modifier l'épaisseur localement, ce qui complexifierait la maintenance de la presse d'injection. Ainsi, la pièce de carrosserie est simple à fabriquer en utilisant un seul moule pour différents modèles. Il est de plus possible d'utiliser la même machine pour réaliser des pièces de carrosserie avec ou sans zone transparente, ce qui permet de diversifier les types de pièces produits avec un même moyen de fabrication. Il n'est pas nécessaire de développer un système d'injection spécifique, capable de générer des épaisseurs différentes, ce qui est long et complexe, et génère en général des défauts importants. Ce procédé est donc plus fiable. Les moyens de post-traitement pour enlever la matière localement peuvent être parallélisés pour permettre de tenir les cadences de production. En effet, le temps pour obtenir la pièce injectée peut, par exemple, être deux fois plus court que le temps de traitement pour enlever la matière localement. Dans ce cas, avoir deux moyens de post-traitements permet d'obtenir les pièces à la même cadence que l'injection.
- l'étape de peinture est antérieure à l'étape d'enlèvement de matière. On obtient ainsi, en une seule étape d'enlèvement de matière, à la fois la seconde zone et un contour précis des zones transparentes.
- la matière est enlevée par fraisage. Cette technique d'enlèvement de matière permet d'obtenir une découpe franche et surtout très rapidement, et permet le cas échéant de découper en même temps, de façon franche également, par exemple un revêtement de peinture qui recouvrait entièrement la pièce, et qui doit souligner le contour de la seconde zone.
- on fait fluer une quantité de matière hors de la région destinée à former la seconde zone, afin d'enlever la matière. Dans un mode de réalisation, on réalise le fluage au moyen d'un moyen chauffant, tel qu'un poinçon chauffant ou un poinçon à ultrason. Dans ce mode de réalisation, le procédé comporte les étapes suivantes :
   - On dispose la pièce de carrosserie sur un support,
   - On place un moyen chauffant à proximité de région destinée à former la seconde zone ou dans la région destinée à former la seconde zone de manière à faire fondre une quantité de matière de la région destinée à former la seconde zone,
   - On effectue un fluage de la matière fondue dans la zone périphérique de manière à obtenir la seconde épaisseur.
   De façon préférée, le moyen chauffant présente une surface de contact destinée à venir en contact avec la seconde zone pour faire fondre une quantité de matière de et définir la forme de la seconde zone par le fluage de la matière. Il est donc possible de réaliser le chauffage et le fluage par un même outil ce qui simplifie le procédé de fabrication. Par ailleurs, on comprend que la seconde épaisseur est définie par la distance à parcourir par le moyen chauffant et la pression entre le moyen chauffant et le support.
- la matière est enlevée au moyen d'un faisceau laser.
- la peinture est appliquée sur la face interne de la pièce de carrosserie qui présente des zones avec des épaisseurs réduites selon l'un des procédés ci-dessus. De préférence la peinture est en partie transparente à la lumière, afin de former un effet décoratif de « lumière secrète », c'est-à-dire une lumière diffusée à travers un cache. En effet, lorsque qu'une lumière illuminera la face interne, la lumière traversera la pièce de carrosserie, faisant apparaitre des motifs lumineux correspondant aux zones d'épaisseurs réduites qui ont une transmittance bien plus élevée que les zones avec une épaisseur plus importante.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'un véhicule automobile comprenant une pièce de carrosserie selon l'invention ;
[Fig. 2] la figure 2 est une vue de face de la pièce de carrosserie peinte et présentant des zones transparentes selon un exemple ;
[Fig. 3] la figure 3 est une vue schématique d'une étape d'un procédé de fabrication de la pièce de carrosserie de la figure 2 selon un mode de réalisation de l'invention ;
[Fig. 4] la figure 4 est une vue schématique d'une étape d'un procédé de fabrication de la pièce de carrosserie de la figure 2 selon un autre mode de réalisation de l'invention ;
[Fig. 5] la figure 5 est une vue schématique d'une autre étape du procédé de fabrication de la pièce de carrosserie du mode de réalisation illustré à la figure 4.

### Description détaillée

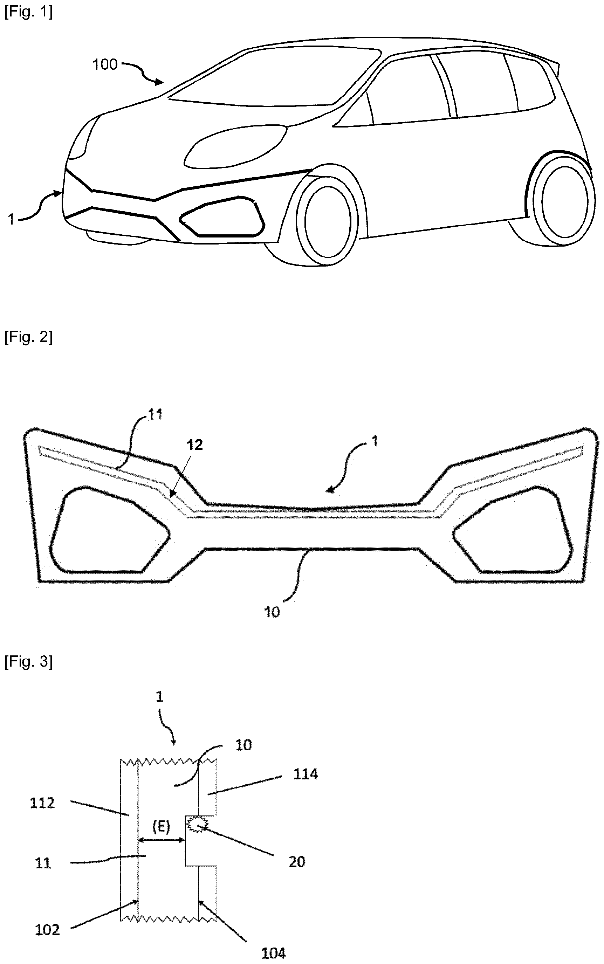

On a représenté sur la figure 1 un véhicule automobile 100 comprenant une pièce de carrosserie 1 qui est un pare-chocs selon un mode de réalisation de l'invention. La pièce de carrosserie 1 est faite en matière plastique comprenant une première zone 10 et une seconde zone 11 comme visible à la figure 2. Dans l'exemple illustré, la seconde zone 11 présente une forme longitudinale qui s'étale sur une grande partie de la longueur du pare-chocs.

La pièce de carrosserie 1 est fabriquée à partir d'un procédé d'injection de plastique mono matière qui peut être choisi parmi la liste suivante : polypropylène naturel translucide, cyclo oléfines copolymères (COC), polyéthylène (PE), polyamide (PA), polycarbonate (PC), mélange de polycarbonate (PC), acrylonitrile butadiène styrène (ABS), polystyrène (PS), polyméthacrylate de méthyle (PMMA), polyuréthane thermoplastique (TPU) et polyester (PET/PETG).

A l'issue du moulage, ou à l'issue d'étapes ultérieures de la fabrication de la pièce de carrosserie, la première zone 10 présente une première épaisseur et la seconde zone 11 présente une seconde épaisseur qui est plus faible que la première épaisseur de manière à ce que la seconde zone 11 ait une meilleure transmittance que la première zone 10. Selon les définitions précitées, la première zone 10 est opaque ou semi-opaque tandis que la seconde zone 11 est transparente ou translucide. Selon un exemple de réalisation, la première épaisseur est de préférence comprise entre 2,8 et 3,5mm.

Selon un mode de réalisation, la pièce de carrosserie 1 est faite d'un matériau de type copolymère aléatoire de polypropylène, de préférence avec un indice de fluidité à chaud (MFR pour « Melt Flow Rate ») moyen (par exemple 11 g/10 min pour 230°C/2.16 kg). Un exemple d'un tel copolymère aléatoire de polypropylène est le Moplen RP340N® (Basell NV, Hoofdorp, Pays-bas), qui possède un indice de fluidité à chaud moyen pour une utilisation dans les applications de moulage par injection. Le Moplen RP340N est nucléé, pour une productivité améliorée et de très bonnes propriétés optiques (transparence et brillance).

Une description de ce copolymère peut être consultée par exemple dans le document suivant : https://www.lyondellbasell.com/en/polymers/p/Moplen-RP340N/927a459e-9beb-4eb6-a995-cdb7ec73d5a0

Selon un exemple de réalisation de ce premier mode de réalisation, la première épaisseur est de préférence comprise entre 2,8 et 3,5mm, et l'épaisseur de la seconde zone 11 est comprise entre 0,5 et 2mm, de préférence environ 1,5mm. Une telle épaisseur permet à la seconde zone 11, zone amincie par rapport à la première zone, de présenter une meilleure transmittance, qui peut atteindre jusqu'à 81% de transmittance pour une épaisseur de 1,5mm environ.

Le procédé de fabrication de la pièce de carrosserie consiste à mettre en place une étape de moulage au cours de laquelle la matière choisie est injectée dans un moule pour former la pièce de carrosserie 1. La pièce obtenue est ensuite peinte. Pour ce faire, un marouflage est d'abord effectué dans la seconde zone 11. Par exemple, un film de marouflage est posé dans la seconde zone 11 et est tenu par un adhésif. La partie recouverte du film correspond à une zone prédéfinie 12 destinée à être non peinte et transparente. Une peinture est appliquée sur le pare-chocs 1 avant que le film soit retiré du pare-chocs.

Comme illustré à la figure 2, après la peinture et le retrait du film, on obtient un pare-chocs 1 peint, sauf au niveau de la zone prédéfinie 12 qui reste transparente.

Dans un mode de réalisation non représenté, la seconde zone 11 est obtenue en utilisant un insert dans le moule.

Dans un autre mode de réalisation, la seconde zone 11 est obtenue par enlèvement de matière dans la pièce de carrosserie 1.

Dans une variante du mode de réalisation par enlèvement de matière, représentée à la figure 3, la matière est enlevée par fraisage. La figure représente une partie de la pièce de carrosserie 1 vue en coupe, à la fin de l'étape de fraisage. La pièce 1 comprend une face externe 102 et une face interne 104. Dans l'exemple représenté à la figure 3, la face externe 102 est revêtue par un revêtement de peinture 112, et la face interne 104 est revêtue par un revêtement de peinture 114. Ainsi dans cet exemple, la pièce de carrosserie 1 est peinte à la fois sur sa face externe 102, et sur sa face interne 104. La pièce de carrosserie 1 a été découpée sur sa face interne 104 à l'aide de de la fraise 20, qui a, par abrasion, enlevé de la matière. De ce fait la seconde zone 11 a une épaisseur (E) moins importante que l'épaisseur de la pièce 1 dans la première zone 10. Dans cet exemple, l'étape de peinture était antérieure à l'étape d'enlèvement de matière. Ainsi en une simple étape d'enlèvement de matière, on a obtenu la seconde zone 11 et un contour précis de la zone transparente, qui est encadrée précisément par la peinture 114 demeurée en place. Dans une variante similaire, la matière injectée et la peinture sont enlevées par grattage laser, plutôt que par fraisage. Dans ce cas, l'élément 20 figure un rayon laser.

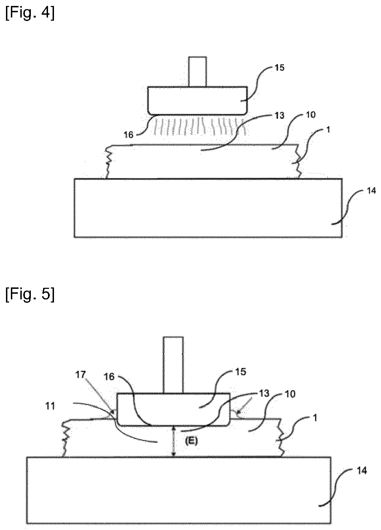

Dans une autre variante du mode de réalisation par enlèvement de matière, représentée aux figures 4 et 5, on fait fluer une quantité de matière hors de la région 13 destinée à former la seconde zone 11. Dans l'exemple représenté, on réalise le fluage grâce à un moyen chauffant 15, tel qu'un poinçon chauffant (qui émet directement de la chaleur) ou un poinçon à ultrason (qui émet des ultrasons qui échauffent la matière). Le moyen chauffant 15 permet ainsi de faire fondre une quantité de matière plastique de la région 13, et de la faire fluer hors de la région 13.

Dans cet exemple, on réalise les étapes suivantes :
- On dispose la pièce de carrosserie 1 sur un support 14 tel que visible sur la figure 4,
- On place un moyen chauffant 15 à proximité de région 13 destinée à former la seconde zone 11 ou dans la région 13 destinée à former la seconde zone 11 de manière à faire fondre une quantité de matière de la région 13.
- On effectue un fluage de la matière fondue 17 dans la première zone 10 de manière à obtenir la seconde épaisseur (E) de la seconde zone 11 comme visible à la figure 5.

Le moyen chauffant 15 dans cet exemple est constitué d'un poinçon à ultrason présentant une surface de contact 16 destinée à venir en contact avec la région 13 pour faire fondre une quantité de matière de cette région 13 et définir la forme de la seconde zone 11 par le fluage de la matière fondue 17 dans la première zone 10. Le moyen chauffant 15 peut également être un dispositif d'émission de chaleur.

On comprend que la seconde épaisseur (E) est définie avec précision par la distance à parcourir par le moyen chauffant 15 et la pression entre le moyen chauffant 15 et le support 14. Pour ce faire, une unité de control peut être mise en place pour commander le déplacement du moyen chauffant 15 en fonction de la seconde épaisseur (E) souhaitée.

L'invention n'est pas limitée aux modes de réalisation présentés et d'autres modes de réalisation apparaîtront clairement à l'homme du métier. Notamment, la transparence dans la zone prédéfinie 12 peut également être obtenue par le grattage laser dans cette zone après que le pare-chocs ait été peint dans sa totalité.

**Liste de références**
- 1: : pièce de carrosserie
- 10: : première zone
- 11: : seconde zone
- 12: : zone prédéfinie
- 13: : région destinée à former la seconde zone
- 14: : support
- 15: : moyen chauffant
- 16: : surface de contact
- 17: : matière fondue
- 20: : fraise ou faisceau laser
- 100: : véhicule automobile
- 102: : face externe de la pièce de carrosserie
- 104: : face interne de la pièce de carrosserie
- 112: : revêtement externe de peinture
- 114: : revêtement interne de peinture
- (E): : seconde épaisseur

## Revendications

1. Pièce de carrosserie (1) en matière plastique peinte constituée d'une unique matière plastique, et d'un seul tenant, et comprenant une première zone (10) ayant une première épaisseur et une seconde zone (11) ayant une seconde épaisseur (E), la première épaisseur étant plus importante que la seconde épaisseur (E) de manière à ce que la seconde zone (11) ait une transmittance supérieure à celle de la première zone (10).

2. Pièce de carrosserie (1) selon la revendication 1, dans laquelle la première zone (10) est opaque ou semi-opaque et la seconde zone (11) est transparente ou translucide.

3. Pièce de carrosserie (1) selon l'une quelconque des revendications précédentes, dans laquelle la matière est choisie parmi : polypropylène naturel translucide, cyclo oléfines copolymères (COC), polyéthylène (PE), polyamide (PA), polycarbonate (PC), acrylonitrile butadiène styrène (ABS), mélange de polycarbonate (PC), polystyrène (PS), polyméthacrylate de méthyle (PMMA), polyuréthane thermoplastique (TPU) et polyester (PET/PETG).

4. Pièce de carrosserie (1) selon l'une quelconque des revendications 1 ou 2, dans laquelle la matière est un copolymère aléatoire de polypropylène, tel que du Moplen RP340N®.

5. Pièce de carrosserie (1) selon la revendication précédente, dans laquelle la seconde zone (11) présente une épaisseur (E) comprise entre 0,5 et 2 mm, de préférence une épaisseur sensiblement égale à 1,5mm.

6. Pièce de carrosserie (1) selon la revendication précédente, dans laquelle la première zone (10) présente une épaisseur (E) comprise entre 2,8 et 3,5mm.

7. Véhicule automobile (100) comportant au moins une pièce de carrosserie (1) selon l'une quelconque des revendications précédentes.

8. Procédé de fabrication de la pièce de carrosserie (1) selon l'une quelconque des revendications 1 à 6, comprenant une étape de moulage consistant à injecter dans un moule la matière pour former la pièce de carrosserie (1) et une étape de peinture au moins sur la première zone (10).

9. Procédé selon la revendication précédente, comprenant les étapes suivantes :
- maroufler la seconde zone (11) ;
- peindre l'ensemble de la pièce de carrosserie (1) ;
- retirer le marouflage.

10. Procédé selon la revendication 8, comprenant les étapes suivantes :
- peindre l'ensemble de la pièce de carrosserie (1) ;
- enlever la peinture située dans la seconde zone (11) au moyen d'un faisceau laser.

11. Procédé selon l'une quelconque des revendications 8 à 10, utilisant un insert dans le moule pour obtenir la seconde zone (11).

12. Procédé selon l'une quelconque des revendications 8 à 10, dans lequel la seconde zone (11) est obtenue par enlèvement de matière dans la pièce de carrosserie (1).

13. Procédé selon la revendication précédente, dans lequel l'étape de peinture est antérieure à l'étape d'enlèvement de matière.

14. Procédé selon l'une quelconque des revendications 12 et 13, dans lequel la matière est enlevée par fraisage.

15. Procédé selon l'une quelconque des revendications 12 et 13, dans lequel on fait fluer une quantité de matière (17) hors de la région (13) destinée à former la seconde zone (11), afin d'enlever la matière.
